# FASCICULE DE BREVET EUROPEEN

(11) **EP 2 756 155 B1**
(45) Date de publication et mention de la délivrance du brevet: **27.02.2019**
(21) Numéro de dépôt: 12762330.4
(22) Date de dépôt: 10.09.2012
(51) Int. Cl.: E21B 17/042, F16L 15/00

(54) **ENSEMBLE POUR LA RÉALISATION D'UN JOINT FILETE POUR LE FORAGE ET L'EXPLOITATION DES PUITS D'HYDROCARBURES ET JOINT FILETE RESULTANT**
ANORDNUNG ZUR HERSTELLUNG EINER GEWINDEVERBINDUNG ZUM BOHREN UND BETREIBEN EINES ÖLBOHRLOCHES UND ERZEUGTE GEWINDEVERBINDUNG
ARRANGEMENT FOR MANUFACTURING A THREAD JOINT FOR DRILLING AND OPERATING HYDROCARBON WELLBORES AND RESULTING THREAD JOINT

(30) Priorité: 13.09.2011 FR 1102769
(43) Date de publication de la demande: 23.07.2014
(73) Titulaire: VALLOUREC OIL AND GAS FRANCE, 59620 Aulnoye-Aymeries (FR)
(72) Inventeur: BESSE, Jean-Guillaume, F-59000 Lille (FR)
(74) Mandataire: de Kernier, Gabriel
(86) Numéro de dépôt international: PCT/FR2012/000354
(87) Numéro de publication internationale: WO 2013/038072

(56) Documents cités:
- WO-A1-2007/115183
- WO-A1-2008/027770
- WO-A1-2010/130344
- US-B2- 7 850 211

## Description

La présente invention a pour objet un ensemble pour la réalisation d'un joint fileté utilisé pour le forage et l'exploitation des puits d'hydrocarbures, l'ensemble comportant un premier et un second composants tubulaires, dotés pour l'un d'une extrémité filetée de type mâle et pour l'autre d'une extrémité filetée de type femelle, les deux extrémités étant aptes à coopérer en vissage autobloquant. L'invention a aussi pour objet un joint fileté, appelé également connexion, résultant du raccordement par vissage des deux composants tubulaires.

On entend par composant « utilisé pour le forage et l'exploitation des puits d'hydrocarbures », tout élément de forme sensiblement tubulaire destiné à être assemblé à un autre élément du même type ou non pour constituer in fine soit une garniture apte à forer un puits d'hydrocarbures, soit une colonne montante sous-marine pour la maintenance telle que les « work over riser », soit une colonne de cuvelage ou de production de forte épaisseur intervenant dans l'exploitation du puits. L'invention s'applique notamment aux composants utilisés dans une garniture de forage tels que par exemple les tiges de forage « Drill Pipes », les tiges lourdes « Heavy Weight Drill Pipes », les masses-tiges « Drill Collars » et les parties de connexion des tiges et des tiges lourdes dites les « tool joint ».

De manière connue, chaque composant utilisé dans une garniture de forage comporte généralement une extrémité dotée d'une zone filetée mâle et une extrémité dotée d'une zone filetée femelle destinées chacune à être assemblée par vissage avec l'extrémité correspondante d'un autre composant, l'assemblage définissant une connexion. La garniture ainsi constituée est mise en rotation lors du forage à la surface du puits; de ce fait les composants doivent être vissés entre eux avec un couple important pour pouvoir transmettre un couple de rotation suffisant permettant le forage dans le puits sans qu'il y ait de dévissage ou bien de sur-vissage.

Sur des produits classiques, le couple de vissage est généralement atteint grâce à la coopération en serrage de surfaces de butée ménagées sur chacun des composants destinés à être vissés. Toutefois, compte tenu du fait que l'étendue des surfaces de butées est une fraction de l'épaisseur des tubes, on atteint rapidement le seuil critique de plastification des surfaces de butées, lorsqu'un couple de serrage trop élevé est appliqué.

De ce fait, des développements ont été réalisés sur les filetages, afin de pouvoir décharger les surfaces de butée d'au moins une partie voire de la totalité des efforts qu'elles n'étaient pas en mesure d'encaisser. L'objectif a été atteint en utilisant des filetages autobloquants tels que décrits dans l'art antérieur US Re 30 647 et US Re 34 467. Dans ce type de filetages appelés autobloquants, soit Self Locking Threads en anglais, les filets (appelés aussi dents) de l'extrémité mâle et les filets (appelés aussi dents) de l'extrémité femelle sont à pas constant mais à largeurs de filets variables.

Plus précisément, les largeurs des sommets de filets (ou dents) sont progressivement croissantes pour les filets de l'extrémité mâle, respectivement femelle, lorsqu'on s'éloigne de l'extrémité mâle, respectivement femelle. Ainsi, au cours du vissage les filets (ou dents) mâles et femelles finissent par se bloquer les uns dans les autres dans une position correspondant au point de blocage. Plus précisément, le blocage s'effectue pour les filetages autobloquants lorsque les flancs des filets (ou dents) mâles se bloquent contre les flancs des filets (ou dents) femelles correspondants. Lorsque la position de blocage est atteinte, les zones filetées mâle et femelle vissées l'une dans l'autre admettent un plan de symétrie selon lequel la largeur au milieu de la hauteur commune des dents mâle et femelle située à l'extrémité de la zone filetée mâle correspond à la largeur au milieu de la hauteur commune des dents mâle et femelle située à l'extrémité de la zone filetée femelle.

De ce fait, le couple de vissage est encaissé par la quasi-totalité des surfaces de contacts entre les flancs, soit une surface totale très nettement supérieure à celle constituée par les surfaces de butée de l'art antérieur.

Toutefois la nécessité de rendre étanche les zones filetées de ce type de joints en imposant un contact entre les flancs et entre les sommets et fonds de filets rend l'opération de vissage (appelée aussi make-up) complexe lorsqu'un lubrifiant est utilisé. En effet, avant d'assembler les joints, un film lubrifiant est appliqué sur les zones filetées de l'extrémité mâle (appelée aussi pin), de l'extrémité femelle (appelée aussi box), ou bien sur les deux. Ce film lubrifiant est habituellement beaucoup plus épais que nécessaire. Ainsi, lors de l'assemblage du joint, l'excédent de lubrifiant s'écoule à travers les zones filetées puis est évacué au niveau de l'épaulement externe du composant tubulaire mâle ou bien au niveau de l'épaulement interne du composant tubulaire femelle.

De plus, il peut arriver que le lubrifiant reste emprisonné dans le filetage et qu'il génère une contre pression qui tend à désolidariser les filets imbriqués les uns dans les autres. En d'autres termes, le lubrifiant peut être emprisonné sous pression si le jeu radial ou axial est suffisamment faible, c'est-à-dire s'il est inférieur à l'épaisseur de lubrifiant appliqué sur les zones filetées. Ceci arrive plus particulièrement dans le cas où les filets sont en contact serrant par exemple au niveau des sommets et fonds de filets et au niveau des flancs. De ce fait on obtient une lecture fausse du couple de serrage. Puis, une fois mis en service sous un couple de serrage insuffisant, le joint peut ne plus être étanche et de l'excès de lubrifiant sous pression peut fuir.

Des développements ont été effectués afin de pallier ces inconvénients. Les documents US6050610 et US7350830 proposent d'introduire une rainure sur les filets afin d'évacuer le lubrifiant. Toutefois, la présence de rainures affaiblit la résistance en fatigue et compromet l'étanchéité. D'autres solutions ont été envisagées, telles que proposées dans le document US2007/0216160.

En effet, le principe est de créer des perturbations dans les zones filetées de sorte que la pression de contact entre les filets soit annulée sur certaines portions notamment pour permettre la circulation du lubrifiant et éviter ainsi la problématique de surpression.

Toutefois ces configurations posent problème dans la mesure où le contrôle des zones filetées est rendu complexe. Il est nécessaire en effet de s'assurer si la perturbation est prévue au plan ou bien si c'est un défaut d'usinage. De plus, la diminution de la pression de contact dans une zone donnée doit être compensée par une augmentation de la pression de contact dans une zone voisine. Ceci induit alors des risques de grippage.

Le document US7850211 propose un filetage à serrage autobloquant comportant des jeux pouvant être ménagés aussi bien entre les sommets et les fonds de filets, qu'entre les flancs, et de sorte que le volume total de jeux est maximum au niveau de la zone centrale du filetage pour décroître en direction des extrémités du filetage. Cette solution présente encore l'inconvénient d'imposer une variation complexe des cotes du filetage et donc de rendre délicates les opérations d'usinage et de contrôle. De plus, le fait que le volume de jeu total soit maximum au niveau de la portion centrale du filetage, et ce, en ménageant des divers jeux au niveau des filets, fragilise la connexion dans la mesure où les filets de sont plus en prise étroite, c'est-à-dire à serrage autobloquant, dans cette portion.

C'est pourquoi l'invention a pour objet de faciliter la circulation de lubrifiant lors du make-up sans compromettre l'étanchéité du joint ni sa résistance en fatigue.

Plus précisément, l'invention a pour objet un ensemble pour la réalisation d'un joint fileté, comprenant un premier et un second composants tubulaires d'axe de révolution et dotés chacun en l'une de leurs extrémités d'au moins une première zone filetée réalisée sur la surface périphérique extérieure ou intérieure du composant selon que l'extrémité filetée est du type mâle ou femelle et apte à coopérer entre elles en vissage, lesdites extrémités s'achevant par une surface terminale, caractérisé en ce qu'au moins une des zones filetées admet, suivant une coupe longitudinale passant par l'axe, un profil correspondant à une portion de courbe continue et concave sur au moins 10 % de la longueur des filets engagés de ladite zone filetée.

Des caractéristiques optionnelles de l'invention, complémentaires ou de substitution, sont énoncées ci-après.

La portion de courbe concave (C) peut être est un arc de cercle ou une ellipse, telle que la plus faible hauteur de filet est diminuée de 10% à 90%.

Les premier et un second composants tubulaires peuvent comprendre chacun une seconde zone filetée réalisée sur la surface périphérique extérieure ou intérieure du composant selon que l'extrémité filetée est du type mâle ou femelle et apte à coopérer entre elles en vissage.

Pour chaque composant, la seconde zone filetée peut être disposée dans le prolongement de la première zone filetée.

Le premier et le second composants tubulaires peuvent comporter chacun une surface d'étanchéité métal/métal disposée entre la première et seconde zone filetée, les surfaces d'étanchéité métal/métal étant aptes à coopérer en serrage étanche lorsque le premier et le second composants tubulaires sont vissés entre eux.

L'une des surfaces d'étanchéité métal/métal peut être conique, l'autre surface d'étanchéité étant alors torique.

La surface torique peut être disposée sur le composant tubulaire d'extrémité de type mâle, le rayon du tore étant compris entre 40 et 80 mm, tandis que la surface conique est disposée sur le composant tubulaire d'extrémité de type femelle suivant une conicité comprise entre 1 et 6 degrés.

La ou les zone(s) filetée(s) peut (peuvent) admettre (chacune) une génératrice de conicité formant un angle avec l'axe de révolution des composants tubulaires, supérieur à 0.5 degrés et préférentiellement égal à 5 degrés.

La (les) zone(s) filetée(s) peut (peuvent) être à serrage autobloquant, les filets comprenant, vus suivant une coupe longitudinale passant par l'axe de révolution des premier et second composants tubulaires, un sommet de filet, un fond de filet, un flanc porteur, un flanc d'engagement, et la largeur des sommets de filet de chaque composant tubulaire diminuant en direction de la surface terminale composant tubulaire considéré, tandis que la largeur des fonds de filet augmente.

Les filets des composants tubulaires mâle et femelle peuvent admettre un profil en queue d'aronde.

Le profil correspondant à une portion de courbe concave peut être appliqué à la zone filetée la plus lointaine de la surface terminale du composant tubulaire d'extrémité de type mâle.

la moins une des zones filetées admet, suivant une coupe longitudinale passant par l'axe, un profil adossé à au moins deux portions de courbes continues et concaves.

Les premiers et derniers filets des zones filetées peuvent être imparfaits, de manière à ménager un jeu entre les sommets et les fonds de filets.

Le jeu entre les sommets et les fonds des filets imparfaits peut être compris entre 0.1 mm et 1.5 mm.

La seconde zone filetée peut être disposée selon un axe de conicité parallèle et non concourant avec l'axe de conicité de la première zone filetée.

L'hélice de la seconde zone filetée peut être décalée par rapport à l'hélice de la première zone filetée selon un angle alpha.

L'invention a également pour objet un joint fileté résultant du montage en serrage autobloquant d'un ensemble conforme à l'invention.

L'invention a également pour objet un procédé de fabrication d'un composant tubulaire d'axe de révolution, caractérisé en ce qu'on procède à un premier usinage d'une des extrémités du composant tubulaire de manière à obtenir un profil, suivant une coupe longitudinale passant par l'axe, correspondant à une portion de courbe continue et concave, avant de procéder à un second usinage de manière à obtenir une zone filetée conforme à l'invention.

Les caractéristiques et avantages de l'invention sont exposés plus en détail dans la description ci-après, avec référence aux dessins annexés.

La figure 1 est une vue schématique en coupe longitudinale d'un joint résultant de l'assemblage par vissage autobloquant de deux composants tubulaires, et conforme à un mode de réalisation de l'invention.

La figure 2 est une vue schématique en coupe longitudinale d'un joint en cours d'assemblage par vissage autobloquant de deux composants tubulaires, et conforme à un mode de réalisation de l'invention.

La figure 3 est une vue schématique en coupe longitudinale d'un joint résultant de l'assemblage par vissage autobloquant de deux composants tubulaires conformes à l'invention suivant un autre mode de réalisation.

Les figures 4 et 5 sont une vue schématique en coupe longitudinale d'un composant tubulaire.

La figure 6 est un graphique comparant les jeux dans les filetages d'une courbe relative à un mode de réalisation de l'invention à une courbe d'un joint classique.

La figure 7 est un autre graphique comparant les jeux dans les filetages d'une courbe relative à un mode de réalisation de l'invention à une courbe d'un joint classique.

La figure 8 est un autre graphique comparant les jeux dans les filetages d'une courbe relative à l'invention à une courbe d'un joint classique.

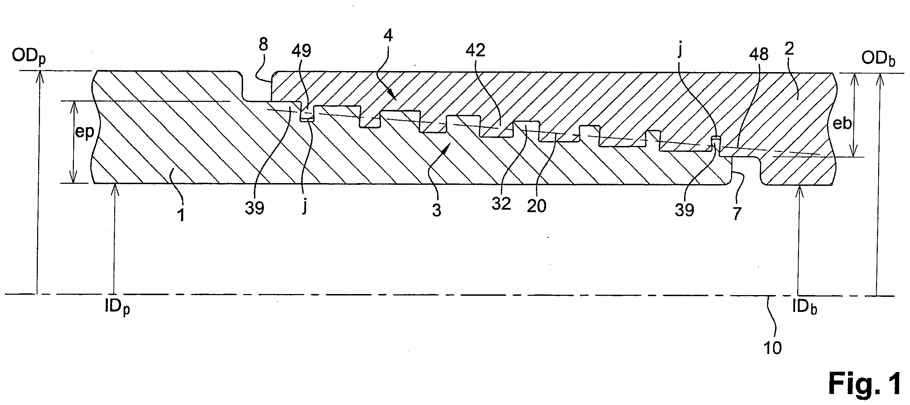

On a représenté sur la figure 1 un premier mode de réalisation de l'invention avec un joint fileté à l'état vissé d'axe de révolution 10, comprenant un premier composant tubulaire de même axe de révolution 10 et doté d'une extrémité mâle 1 et un second composant tubulaire de même axe de révolution 10 et doté d'une extrémité femelle 2, l'extrémité mâle et l'extrémité femelle étant vissées entre elles. Les deux extrémités 1 et 2 s'achèvent chacune par une surface terminale 7, 8 orientée radialement par rapport à l'axe 10 du joint fileté et sont respectivement dotées de zones filetées 3 et 4 qui coopèrent entre elles pour l'assemblage mutuel par vissage des deux composants. On entend par zones filetées, les portions de la surface circonférentielle d'un composant tubulaire présentant un filetage continu, c'est-à-dire sans interruption de l'hélice de filetage.

Les zones filetées 3 et 4 sont du type connu dit « autobloquant » (appelé aussi à variation progressive de la largeur axiale des filets et/ou des intervalles entre filets), de telle sorte qu'un serrage axial progressif s'opère au cours du vissage, jusqu'à une position finale de blocage.

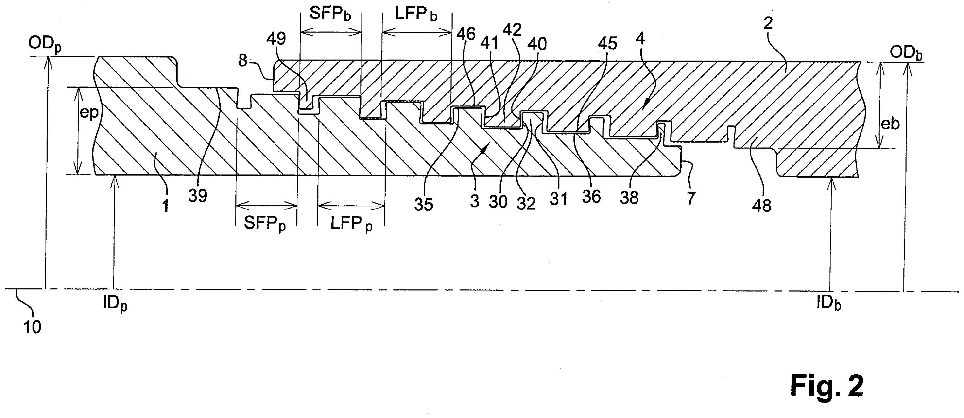

La figure 2 représente le joint de la figure 1, à la différence que le joint est en cours de vissage. On entend par zones filetées autobloquantes, les zones filetées comportant les caractéristiques détaillées ci-après. Les filets (ou dents) mâles 32, tout comme les filets (ou dents) femelles 42, admettent un pas constant alors que leur largeur décroît dans la direction de leur surface terminale respective 7, 8, de sorte qu'au cours du vissage les filets (ou dents) mâles 32 et femelles 42 finissent par se bloquer les uns dans les autres dans une position déterminée.

Plus précisément, le pas LFPb entre les flancs porteurs 40 de la zone filetée femelle 4 est constant tout comme le pas SFPb entre les flancs d'engagement 41 de la zone filetée femelle, avec comme particularité que le pas entre les flancs porteurs 40 est supérieur au pas entre les flancs d'engagement 41. De même, le pas SFPp entre les flancs d'engagement mâles 31 est constant tout comme le pas LFPp entre les flancs porteurs mâles 30. De plus, les pas respectifs SFPp et SFPb entre les flancs d'engagement mâle 31 et femelle 41 sont égaux entre eux et inférieurs aux pas respectifs LFPp et LFPb entre les flancs porteurs mâle 30 et femelle 40, eux-même également égaux entre eux.

Sur la figure 2, on a également représenté l'épaisseur de l'extrémité male 1, ep, appelée également la section critique de l'extrémité male 1, définie non pas par la différence entre le diamètre extérieur ODp et le diamètre intérieur IDp de ladite extrémité, mais à la base de la zone filetée 3, c'est-à-dire au niveau du dernier filet. De même, l'épaisseur de l'extrémité femelle 2, eb, appelée également la section critique de l'extrémité femelle 2, est définie non pas par la différence entre le diamètre extérieur ODb et le diamètre intérieur IDb, mais à la base de la zone filetée 4, c'est-à-dire au niveau du dernier filet. A partir de l'épaisseur de l'extrémité male 1, ep, on définit donc la section critique de l'extrémité mâle et à partir de l'épaisseur de l'extrémité femelle 2, eb, on définit donc la section critique de l'extrémité femelle, lesdites sections critiques étant en fait des surfaces lorsqu'on effectue une coupe transversale des extrémités mâle ou femelle au niveau des zones d'épaisseur ep et eb.

On définit ainsi l'efficacité du joint comme étant égale au rapport entre la valeur minimum entre la section critique de l'extrémité mâle et la section critique de l'extrémité femelle, et la section courante du tube. Naturellement la section courante du tube est à relier à l'épaisseur des composants filetés mesurée loin des zones filetées. Cette épaisseur est alors constante pour le composant mâle et pour le composant femelle. L'épaisseur se calcule aussi bien à partir de la différence entre ODb et IDb, qu'à partir de la différence entre ODp et IDp. La notion d'efficacité du joint est à relier à la résistance en fatigue du joint.

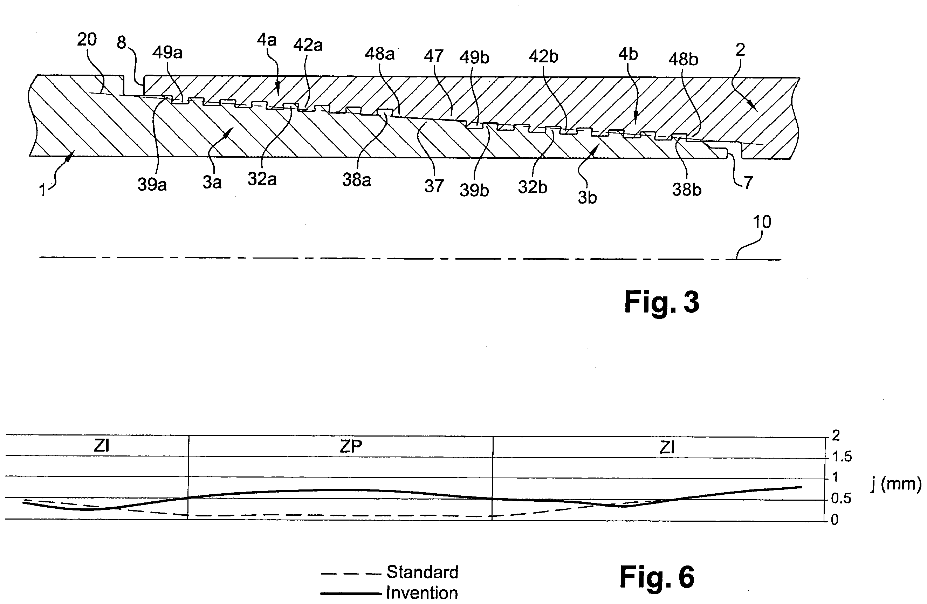

La figure 3 représente un second mode de réalisation de l'invention avec un joint fileté à l'état vissé. Le joint comprend un axe de révolution 10, comprenant un premier composant tubulaire de même axe de révolution 10 et doté d'une extrémité mâle 1 et un second composant tubulaire de même axe de révolution 10 et doté d'une extrémité femelle 2, l'extrémité mâle et l'extrémité femelle étant vissées entre elles. Les deux extrémités 1 et 2 s'achèvent chacune par une surface terminale 7, 8 orientée radialement par rapport à l'axe 10 du joint fileté. Les premier et second composants tubulaires sont respectivement dotés d'une première et d'une seconde zones filetées 3a, 3b et 4a, 4b qui coopèrent entre elles pour l'assemblage mutuel par vissage des deux composants. Les zones filetées sont également du type connu dit « autobloquant ».

Selon une première variante, les zones filetées 3a et 3b de l'extrémité mâle sont alignées suivant une même direction 20. En d'autres termes, la seconde zone filetée 3b tubulaire est disposée dans le prolongement de la première zone filetée 3a. De même les zones filetées 4a et 4b de l'extrémité femelle sont alignées suivant la même direction 20. La première 3b et la seconde 3a zones filetées de l'extrémité mâle sont encadrées respectivement par un premier 38b, 38a filet et un dernier 39b, 39a filet. De même, la première 4a et la seconde 4b zones filetées de l'extrémité femelle sont encadrées respectivement par un premier 49a, 49b filet et un dernier 48a, 48b filet.

Selon une autre variante non représentée sur les figures, on peut aussi envisager un joint étagé, comportant pour chaque composant mâle ou femelle deux zones filetées non plus alignées mais disposées selon des directions parallèles.

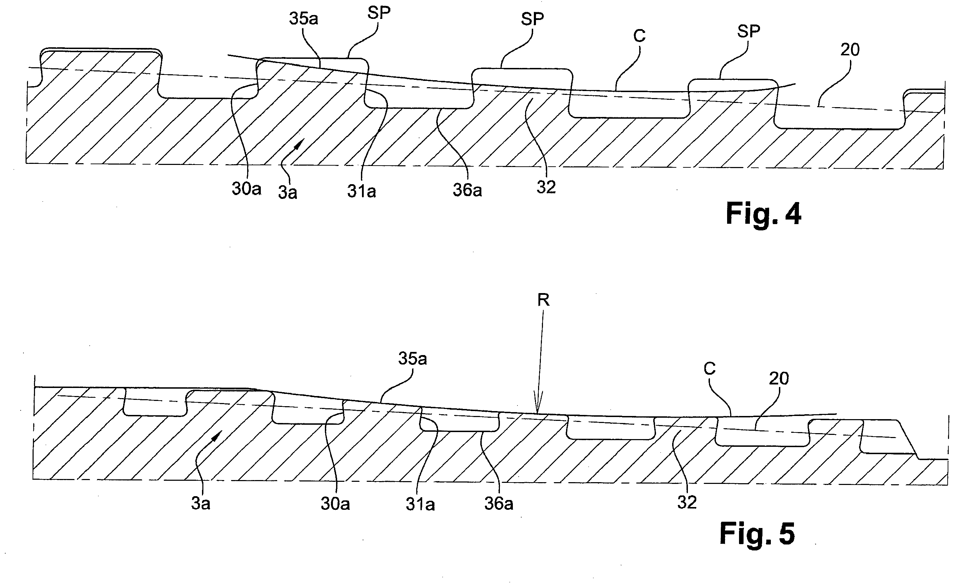

La figure 4 est une vue détaillée du composant mâle des figures 1 et 2. Selon l'invention, au moins l'une des zones filetées admet, suivant une coupe longitudinale passant par l'axe 10, un profil adossé à une portion de courbe continue et concave C sur la majeure partie des filets engagés de ladite zone filetée. On entend par « profil adossé à une portion de courbe », le fait que, lorsqu'on réalise une coupe longitudinale passant par l'axe 10, les sommets des filets s'inscrivent chacun sur une seule courbe appartement au plan de coupe. Selon la figure 4, c'est la zone filetée 3 de l'extrémité mâle qui admet le profil suivant la courbe C.

On entend par courbe continue le fait que la courbe n'admet pas de point d'inflexion. On entend par courbe concave, le fait qu'elle est orientée de manière à creuser le profil de la zone filetée. Ce profil s'applique de plus sur au moins 10 % de la longueur des filets engagés. On entend par filets engagés, les filets qui entrent en contact avec les filets de la partie conjuguée, par opposition avec les filets dits « imparfaits », qui se situent aux extrémités du filetage et qui n'encaissent quasiment pas d'efforts de vissage dans la mesure où ils n'entrent pas en contact avec les filets de la partie conjuguée. En d'autres termes, les sommets 35a des filets de la zone filetée mâle sont adossés à la portion de courbe C.

Sur la figure 4, on a également représenté un profil SP de filets connu de l'art antérieur qui se différencie clairement du profil émoussé des filets adossés à la courbe C conformément à l'invention. On voit donc que le creusement réalisé dans le filetage par la courbe C ménage la circulation du lubrifiant. On voit aussi que le profil creusé du filetage n'affecte pas la section critique de l'élément fileté sur lequel est réalisé ledit profil. De ce fait, l'efficacité du joint est préservée.

A titre d'alternative, l'invention pourrait être appliquée non pas à la zone filetée mâle, mais plutôt à la zone filetée femelle. De même, il serait également possible de donner un profil concave à la fois à la zone filetée mâle et à la zone filetée femelle.

La figure 5 est une vue détaillée du composant mâle de la figure 3. Selon l'invention, au moins l'une des zones filetées admet, suivant une coupe longitudinale passant par l'axe 10, un profil correspondant à une portion de courbe continue et concave C sur la majeure partie des filets engagés de ladite zone filetée. Selon la figure 5, c'est la zone filetée 3a de l'extrémité mâle qui admet le profil suivant la courbe C. Le fait que le profil de courbe concave soit appliqué à la seconde zone filetée 3a du composant mâle, c'est-à-dire celle qui est la plus lointaine de la surface terminale 7 du composant tubulaire d'extrémité de type mâle 1 est avantageux. En effet, de cette manière, la pression de graisse est réduite à l'endroit où l'épaisseur du composant mâle est la plus faible.

Que ce soit pour le mode de réalisation de la figure 5 correspondant à un joint doté de deux filetages alignés, ou bien pour le mode de réalisation de la figure 4 et correspondant à un joint doté d'un seul filetage, plusieurs possibilités ont été envisagées par la Demanderesse concernant le profil de la portion de courbe. La portion de courbe peut être à titre d'exemple non limitatif une portion de courbe polynomiale, d'une ellipse ou bien encore d'un cercle.

Préférentiellement, il est avantageux d'utiliser un arc de cercle ou une ellipse de sorte que la plus faible hauteur de filet est diminuée de 10% à 90%. En d'autres termes, la zone filetée est creusée sur une portion de sorte que la hauteur des filets est diminuée au plus en une valeur comprise entre 10 et 90% de la hauteur initiale des filets.

Tel que représenté sur les figures 1 et 2 et de manière avantageuse, les filets (ou dents) mâles et femelles admettent un profil, vu suivant une coupe longitudinale passant par l'axe du joint fileté 10, globalement d'allure en queue d'aronde de manière à ce qu'ils soient solidement emboîtés l'un dans l'autre après vissage.

Cette garantie supplémentaire permet de s'affranchir des risques dits de «jump out », qui correspondent à une désolidarisation des filets mâles et femelles lorsque la connexion est soumise à d'importants efforts de flexion ou de traction. Plus précisément, la géométrie des filets en queue d'aronde augmente la rigidité radiale de leur assemblage par rapport à des filets appelés communément "trapézoïdaux", dont la largeur axiale va en diminuant de la base au sommet des filets.

Avantageusement et tel que représenté sur la figure 2, les filetages 3 et 4 des composants tubulaires sont orientés suivant une génératrice de conicité 20 de manière à faciliter la progression du vissage. Généralement cette génératrice de conicité forme un angle avec l'axe 10 compris dans une plage de valeur allant de 1 degré à 6 degrés. La génératrice de conicité est dans le cas présent définie comme passant par le milieu des flancs porteurs.

Avantageusement et tel que représenté sur la figure 2, les sommets des dents et le fond des creux des zones filetées mâle et femelle sont parallèles à l'axe 10 du joint fileté. Ceci facilite en effet l'usinage.

Avantageusement, le premier et le second composants tubulaires comportent chacun une surface d'étanchéité métal/métal 37, 47 disposée entre leur première et seconde zone filetée, les surfaces d'étanchéité métal/métal 37 et 47 étant aptes à coopérer en serrage étanche lorsque le premier et le second composants tubulaires sont vissés entre eux.

De préférence, l'une des surfaces d'étanchéité métal/métal 37, 47 est conique, tandis que l'autre est torique. Le rayon du tore, disposé sur le composant tubulaire d'extrémité de type mâle, peut être compris entre 40 et 80 mm, tandis que la surface conique est disposée sur le composant tubulaire d'extrémité de type femelle suivant une conicité comprise entre 5 et 15%.

De préférence, les sommets des filets de l'extrémité filetée de type femelles sont interférents avec les creux des filets de l'extrémité filetée mâles, dans le cas où une partie du profil de la zone filetée mâle, vu suivant une coupe longitudinale passant par l'axe 10 de la connexion, est adossé à une portion de courbe concave. De ce fait, on maintient un contact serrant entre les sommets de filets femelles et les creux de filets mâles, tandis qu'un jeu variable est ménagé entre les sommets mâles et les creux de filets femelles.

De préférence, les premiers et derniers filets des zones filetées sont imparfaits. On entend par filets imparfaits, les filets 38, 39 et 48, 49 localisés aux extrémités des filetages 3 et 4 (en figure 2), dont la hauteur a été arasée, de sorte qu'un jeu est ménagé entre les sommets et les fonds de filets.

De cette manière, la pression de graisse après vissage est considérablement diminuée par l'augmentation du jeu dans le filetage et ceci afin d'augmenter les performances d'étanchéité. Il n'y a donc pas ou très peu de contre-pression qui diminue la pression de contact sur les portées d'étanchéité et de séparation de l'extrémité mâle avec l'extrémité femelle. Ceci permet aussi d'avoir des courbes de vissage plus justes dans la mesure où elles ne sont pas faussées par la contre-pression exercée par la graisse.

On pourra alors choisir un jeu j entre les sommets et les fonds des filets imparfaits qui est compris entre 0.1 mm et 3 mm.

Sur la figure 6, on a représenté les variations de jeu tout au long du filetage, pour un joint conforme à l'invention. On voit que dans la zone des filets parfaits ZP, le jeu croît au fur et à mesure que le profil selon la courbe C creuse la zone filetée. De part et d'autre de la zone des filets parfaits ZP, on a les zones à filets imparfaits ZI. Ces dernières sont raccordées à la zone ZP en un minimum de jeu pour recroître jusqu'à la fin de la zone filetée. On remarquera que le jeu dans la zone ZP des filets parfaits est compris entre 0.25 et 0.8 mm, alors que le jeu dans la zone ZI des filets imparfaits est compris entre 0.25 et 1 mm.

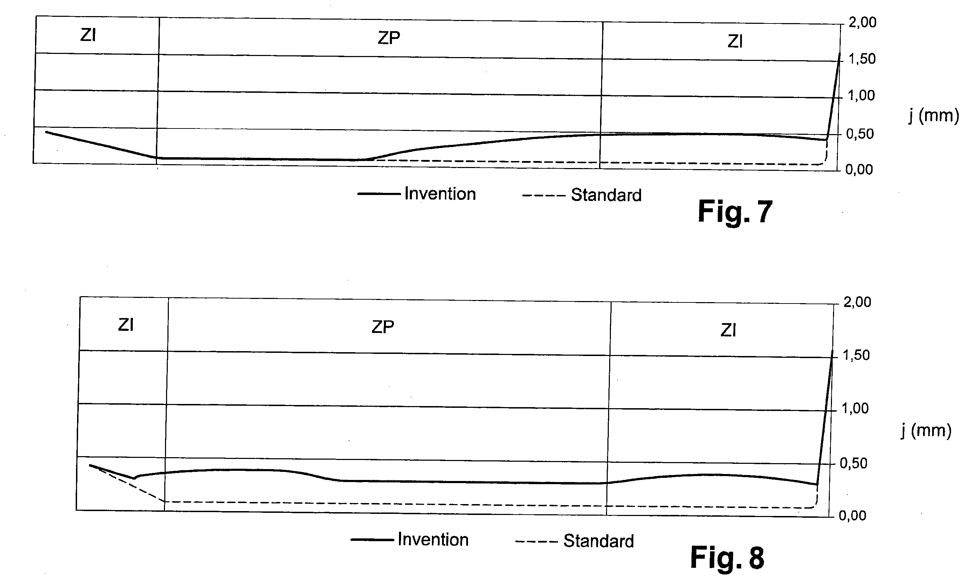

Bien entendu, l'invention englobe également les modes de réalisation qui consiste à réaliser sur un même filetage deux, voire plusieurs portions de courbes concaves. Ceci permet de limiter la diminution de la hauteur de filet et donc de maintenir la prise entre les filets. En d'autres termes, la circulation de la graisse est ménagée tout le long du filetage avec une succession de délardages, le tout en protégeant la connexion des risques de désolidarisation des filets (« jump out »). Un exemple est donné avec la figure 8 sur laquelle on a représenté un mode de réalisation correspondant à deux délardages. Dans ce cas, l'un des éléments filetés admet un filetage doté d'un profil de filets adossé à deux courbes concaves.

L'invention englobe aussi différents modes de réalisation relatifs au positionnement de la courbe concave sur le profil du filetage. Ainsi, la courbe peut être centrée sur le milieu du filetage, tout comme elle peut être décalée vers l'une des extrémités du filetage. La figure 7 est un exemple de réalisation selon lequel, la courbe est décalée et non centrée.

Ainsi, le joint fileté résultant du montage des composants tubulaires conformes à l'invention est obtenu avec un couple de serrage conforme aux normes imposées. Ce type de joint est notamment utilisé dans les applications de forage. Avantageusement, les sommets des filets mâles et/ou femelles peuvent être interférents avec les creux des filets femelles et/ou mâles. Ceci permet d'éviter d'emprisonner du lubrifiant, ce dernier étant chassé lors du vissage vers les flancs des filets.

Bien entendu, l'invention peut s'appliquer à des connexions comportant deux voire plusieurs zones filetées consécutives et étagées, c'est-à-dire dont les axes de conicité des zones filetés sont parallèles non concourants.

L'invention peut aussi s'appliquer à des connexions comportant plusieurs hélices de filetage, ces connexions comportent alors des filetages dits à multi-départs. Dans ce cas, l'hélice de la seconde zone filetée est décalée par rapport à l'hélice de la première zone filetée selon un angle alpha.

Concernant la réalisation d'un tel joint, l'invention propose un procédé de fabrication d'un composant tubulaire applicable aussi bien à un composant d'extrémité mâle qu'à un composant d'extrémité femelle. Ce procédé se caractérise par le fait qu'on procède tout d'abord à l'usinage d'une des extrémités du composant tubulaire de manière à obtenir un profil, suivant une coupe longitudinale passant par l'axe, correspondant à une portion de courbe continue et concave, et qu'après on procède à l'usinage de la zone filetée.

Ce procédé présente l'avantage d'être simple dans la mesure où la première étape revient à effectuer un délardage de l'extrémité du composant tout à fait maîtrisable selon une opération de tournage. La seconde étape d'usinage, qui intervient ultérieurement à l'étape de délardage, est une étape classique d'usinage de la zone filetée.

## Revendications

1. Ensemble pour la réalisation d'un joint fileté, comprenant un premier et un second composants tubulaires d'axe de révolution (10) et dotés chacun en l'une de leurs extrémités (1, 2) d'au moins une première zone filetée (3, 3a; 4, 4a) réalisée sur la surface périphérique extérieure ou intérieure du composant selon que l'extrémité filetée est du type mâle ou femelle et apte à coopérer entre elles en vissage, lesdites extrémités (1, 2) s'achevant par une surface terminale (7, 8), **caractérisé en ce qu'**au moins une des zones filetées admet sur au moins 10 % de la longueur des filets engagés de ladite zone filetée, et suivant une coupe longitudinale passant par l'axe (10), un profil adossé à une portion de courbe continue et concave (C).

2. Ensemble pour la réalisation d'un joint fileté selon la revendication 1, **caractérisé en ce que** la portion de courbe concave (C) est un arc de cercle ou une ellipse, telle que la plus faible hauteur de filet est diminuée de 10% à 90%.

3. Ensemble pour la réalisation d'un joint fileté selon l'une quelconque des revendications précédentes, **caractérisé en ce que** les premier et un second composants tubulaires comprennent chacun une seconde zone filetée (3b ; 4b) réalisée sur la surface périphérique extérieure ou intérieure du composant selon que l'extrémité filetée est du type mâle ou femelle et apte à coopérer entre elles en vissage.

4. Ensemble pour la réalisation d'un joint fileté selon la revendication 3, **caractérisé en ce que**, pour chaque composant, la seconde zone filetée (3b ; 4b) est disposée dans le prolongement de la première zone filetée (3a ; 4a).

5. Ensemble pour la réalisation d'un joint fileté selon la revendication 3 ou 4, **caractérisé en ce que** le premier et le second composants tubulaires comportent chacun une surface d'étanchéité métal/métal (37 ; 47) disposée entre la première et seconde zone filetée (3a, 3b ; 4a, 4b), les surfaces d'étanchéité métal/métal (37 ; 47) étant aptes à coopérer en serrage étanche lorsque le premier et le second composants tubulaires sont vissés entre eux.

6. Ensemble pour la réalisation d'un joint fileté selon la revendication 5, **caractérisé en ce que** l'une des surfaces d'étanchéité métal/métal (37 ; 47) est conique, tandis que l'autre est torique.

7. Ensemble pour la réalisation d'un joint fileté selon la revendication 5, **caractérisé en ce que** la surface torique est disposée sur le composant tubulaire d'extrémité de type mâle, le rayon du tore étant compris entre 40 et 80 mm, tandis que la surface conique est disposée sur le composant tubulaire d'extrémité de type femelle suivant une conicité comprise entre 1 et 6 degrés.

8. Ensemble pour la réalisation d'un joint fileté selon l'une quelconque des revendications précédentes, **caractérisé en ce que** la ou les zone(s) filetée(s) (3 ; 4) admet(tent) (chacune) une génératrice de conicité (20) formant un angle avec l'axe de révolution (10) des composants tubulaires, supérieur à 0.5 degrés et préférentiellement égal à 5 degrés.

9. Ensemble pour la réalisation d'un joint fileté selon la revendication 8, **caractérisé en ce que** la (les) zone(s) filetée(s) (3, 3a, 3b ; 4, 4a, 4b) est (sont) à serrage autobloquant, les filets (32 ; 42) comprenant, vus suivant une coupe longitudinale passant par l'axe de révolution (10) des premier et second composants tubulaires, un sommet de filet (35, 45), un fond de filet (36, 46), un flanc porteur (30 ; 40), un flanc d'engagement (31 ; 41), et la largeur des sommets de filet (35, 45) de chaque composant tubulaire diminuant en direction de la surface terminale (7 ; 8) composant tubulaire considéré, tandis que la largeur des fonds de filet (36, 46) augmente.

10. Ensemble pour la réalisation d'un joint fileté selon la revendication 9, **caractérisé en ce que** les filets des composants tubulaires mâle et femelle admettent un profil en queue d'aronde.

11. Ensemble pour la réalisation d'un joint fileté selon l'une quelconque des revendications 8 à 9, **caractérisé en ce que** le profil correspondant à une portion de courbe concave (C) est appliqué à la zone filetée (3a) la plus lointaine de la surface terminale (7) du composant tubulaire d'extrémité de type mâle (1).

12. Ensemble pour la réalisation d'un joint fileté selon l'une quelconque des revendications précédentes, **caractérisé en ce que** la au moins une des zones filetées admet, suivant une coupe longitudinale passant par l'axe (10), un profil adossé à au moins deux portions de courbes continues et concaves.

13. Ensemble pour la réalisation d'un joint fileté selon l'une quelconque des revendications précédentes, **caractérisé en ce que** les premiers et derniers filets des zones filetées sont imparfaits, de manière à ménager un jeu entre les sommets et les fonds de filets.

14. Ensemble pour la réalisation d'un joint fileté la revendication 13, **caractérisé en ce que** le jeu (j) entre les sommets et les fonds des filets imparfaits est compris entre 0.1 mm et 3 mm.

15. Ensemble pour la réalisation d'un joint fileté selon la revendication 3, **caractérisé en ce que**, pour chaque composant, la seconde zone filetée (3b ; 4b) est disposée selon un axe de conicité parallèle et non concourant avec l'axe de conicité de la première zone filetée (3a ; 4a).

16. Ensemble pour, la réalisation d'un joint fileté selon la revendication 3, **caractérisé en ce que**, pour chaque composant, l'hélice de la seconde zone filetée (3b ; 4b) est décalée par rapport à l'hélice de la première zone filetée (3a ; 4a) selon un angle alpha.

17. Joint fileté résultant du montage en serrage autobloquant d'un ensemble conforme à l'une quelconque des revendications 4 à 16.

18. Procédé de fabrication d'un composant tubulaire d'axe de révolution (10), **caractérisé en ce qu'**on procède à un premier usinage d'une des extrémités du composant tubulaire de manière à obtenir un profil, suivant une coupe longitudinale passant par l'axe (10), correspondant à une portion de courbe continue et concave, avant de procéder à un second usinage de manière à obtenir une zone filetée conforme à l'une quelconque des revendications 1 à 16.

## Patentansprüche

1. Baugruppe für die Herstellung einer Schraubverbindung, welche ein erstes und ein zweites rohrförmiges Element einer Rotationsachse (10) umfasst, wobei jedes an den Enden (1, 2) über mindestens einen ersten Gewindebereich (3, 3a; 4, 4a) am Außen- oder Innenumfang des Elements verfügt, je nach dem, ob es sich bei dem Gewindeendstück um ein Einsteck- oder ein Aufnahmeteil handelt, welche in der Lage sind, bei Verschraubung zusammenzuarbeiten, wobei diese Endstücke (1, 2) in einer Abschlussfläche (7, 8) enden, **dadurch gekennzeichnet, dass** mindestens einer der Gewindebereiche über mindestens 10 % der Länge der in diesem Gewindebereich eingegriffenen Gewinde und im Längsschnitt durch die Achse (10) ein Profil zulässt, welches an einem durchgehenden und konkaven Kurvenabschnitt anliegt.

2. Baugruppe für die Ausführung einer Schraubverbindung nach Anspruch 1, **dadurch gekennzeichnet, dass** der Teil der konkaven Kurve (C) einen Kreisbogen oder eine Ellipse darstellen kann, so dass die geringste Gewindehöhe zwischen 10 % und 90 % gesenkt wird.

3. Baugruppe für die Ausführung einer Schraubverbindung nach einem der vorstehenden Ansprüche, **dadurch gekennzeichnet, dass** die ersten und zweiten rohrförmigen Elemente jeweils einen zweiten Gewindebereich (3b; 4b) an der äußeren oder inneren umlaufenden Fläche des Elements umfassen, je nach dem, ob das Gewindeendstück vom Typ Außen- oder Innengewinde ist und diese geeignet sind, durch Verschrauben zusammenzuarbeiten.

4. Baugruppe für die Ausführung einer Schraubverbindung nach Anspruch 3, **dadurch gekennzeichnet, dass** der Gewindebereich (3b; 4b) für jedes Element in Verlängerung des ersten Gewindebereichs (3a; 4a) angeordnet ist.

5. Baugruppe für die Ausführung einer Schraubverbindung nach Anspruch 3 oder 4, **dadurch gekennzeichnet, dass** das erste und zweite rohrförmige Element jeweils eine Dichtfläche Metall/Metall (37; 47) zwischen dem ersten und dem zweiten Gewindebereich (3a, 3b; 4a, 4b) aufweisen, wobei die Dichtflächen Metall/Metall (37; 47) geeignet sind, in dichter Klemmverschraubung zusammenzuarbeiten, wenn das erste und das zweite rohrförmige Element mit einander verschraubt werden.

6. Baugruppe für die Ausführung einer Schraubverbindung nach Anspruch 5, **dadurch gekennzeichnet, dass** eine der Dichtflächen Metall/Metall (37; 47) konisch ausgebildet ist, während die andere torisch ausgebildet ist.

7. Baugruppe für die Ausführung einer Schraubverbindung nach Anspruch 5, **dadurch gekennzeichnet, dass** die torische Fläche auf dem rohrförmigen Element vom Typ "einzuführen" sein kann, wobei der Torusradius zwischen 40 und 80 mm liegt, während die konische Fläche auf dem rohrförmigen Element vom Typ Aufnahme mit einer Konizität zwischen 1 und 6 Grad liegt.

8. Baugruppe für die Ausführung einer Schraubverbindung nach einem der vorstehenden Ansprüche, **dadurch gekennzeichnet, dass** der/die Gewindebereich(e) (3; 4) jeweils die Erzeugung eines Konus (20) zulassen, welcher mit der Rotationsachse (10) der rohrförmigen Elemente einen Winkel größer als 0,5 Grad und vorzugsweise gleich 5 Grad bildet.

9. Baugruppe für die Ausführung einer Schraubverbindung nach Anspruch 8, **dadurch gekennzeichnet, dass** der (die) Gewindebereich(e) (3, 3a, 3b; 4, 4a, 4b) selbsthemmend verklemmen, wobei die Gewinde (32; 42) im Längsschnitt durch die Rotationsachse (10) des ersten und zweiten rohrförmigen Elements verlaufen, wobei eine Gewindespitze (35; 45), ein Gewindegrund (36; 46), eine tragende Flanke (30; 40), eine eingreifende Flanke (31; 41) und die Breite der Gewindespitzen (35; 45) jedes rohrförmigen Elements in Richtung der Abschlussfläche (7; 8) des betrachteten rohrförmigen Elements abnehmen, während die Breite der Gewindegründe (36; 46) zunimmt.

10. Baugruppe für die Ausführung einer Schraubverbindung nach Anspruch 9, **dadurch gekennzeichnet, dass** die Gewinde der rohrförmigen Außen- und Innenelemente ein Profil in Schwalbenschwanzform zulassen.

11. Baugruppe für die Ausführung einer Schraubverbindung nach einem der Ansprüche 8 und 9, **dadurch gekennzeichnet, dass** das Profil, welches einem konkaven Kurventeil (C) entspricht, auf den entferntesten Gewindebereich (3a) der Abschlussfläche (7) des rohrförmigen Einsteckelements (1) angewandt wird.

12. Baugruppe für die Ausführung einer Schraubverbindung nach einem der vorstehenden Ansprüche, **dadurch gekennzeichnet, dass** mindestens einer der Gewindebereiche in einem durch die Achse (10) verlaufenden Längsschnitt ein Profil zulässt, welches an mindestens zwei Abschnitten der durchgehenden und konkaven Kurven anliegt.

13. Baugruppe für die Ausführung einer Schraubverbindung nach einem der vorstehenden Ansprüche, **dadurch gekennzeichnet, dass** die ersten und letzten Gewindegänge der Gewindebereich unvollständig sind, so dass ein Spiel zwischen den Gewindespitzen und - gründen herbeigeführt wird.

14. Baugruppe für die Ausführung einer Schraubverbindung nach Anspruch 13, **dadurch gekennzeichnet, dass** das Spiel (j) zwischen den unvollständigen Gewindespitzen und - gründen zwischen 0,1 mm und 3 mm liegt.

15. Baugruppe für die Ausführung einer Schraubverbindung nach Anspruch 3, **dadurch gekennzeichnet, dass** der Gewindebereich (3b; 4b) für jedes Element entlang einer parallelen Konusachse und nicht zusammenwirkend mit der Konusachse des ersten Gewindebereichs (3a; 4a) angeordnet ist.

16. Baugruppe für die Ausführung einer Schraubverbindung nach Anspruch 3, **dadurch gekennzeichnet, dass** die Schraubenlinie des zweiten Gewindebereichs (3b; 4b) für jedes Element im Verhältnis zur Schraubenlinie des ersten Gewindebereichs (3a; 4a) in einem Winkel Alpha versetzt ist.

17. Schraubenverbindung, welche sich aus der selbsthemmenden Verklemmung einer Baugruppe gemäß einem der Ansprüche 4 bis 16 ergibt.

18. Verfahren zur Herstellung eines rohrförmigen Elements einer Rotationsachse (10), **dadurch gekennzeichnet, dass** eines der Enden des rohrförmigen Elements ein erstes Mal bearbeitet wird, um ein Profil entlang eines Längsschnitts durch die Achse (10) zu erhalten, welcher einem Teil einer kontinuierlichen und konkaven Kurve entspricht, bevor eine zweite Bearbeitung erfolgt, um einen erfindungsgemäßen Gewindebereich nach einem der Ansprüche 1 bis 16 zu erhalten.

## Claims

1. Assembly for making a threaded joint, comprising a first and a second tubular component of an axis of revolution (10) and each having at one of their ends (1, 2) of at least one first threaded zone (3, 3a; 4, 4a) made on the outer or inner peripheral surface of the component, depending on whether the threaded end is of male or female type, and able to cooperate with each other by screwing in, Said end (1, 2) ending in an end surface (7, 8), **characterised in that** at least one of the threaded zones admits, over at least 10% of the length of the threads engaged in said threaded zone, along a longitudinal section passing through the axis (10), a profile conforming to a continuous and concave curve portion (C).

2. Assembly for making a threaded joint according to claim 1, **characterised in that** the concave curve portion (C) may be a circle arc or an ellipse, such that the lowest thread height is decreased by 10% to 90%.

3. Assembly for making a threaded joint according to any one of the preceding claims, **characterised in that** the first and second tubular components can each comprise a second threaded zone (3b; 4b) made on the outer or inner peripheral surface of the component along depending on whether the threaded end is of male or type and able to cooperate with each other by screwing in.

4. Assembly for making a threaded joint according to claim 3, **characterised in that**, for each component, the second threaded zone (3b; 4b) is positioned in extension to the first threaded zone (3a; 4a).

5. Assembly for making a threaded joint according to claim 3 or 4, **characterised in that** the first and second tubular components each comprise a metal/metal sealing surface (37; 47) positioned between the first and second threaded zones (3a, 3b; 4a, 4b), the metal/metal sealing surfaces (37; 47) being able to cooperate in tight clamping when the first and second tubular components are screwed in to each other.

6. Assembly for making a threaded joint according to claim 5, **characterised in that** one of the metal/metal sealing surfaces (37; 47) is conical, while the other is toric.

7. Assembly for making a threaded joint according to claim 5, **characterised in that** the toric surface is positioned on the male-type end tubular component, the radius of the torus being between 40 and 80 mm, while the conical surface is positioned on the female-type end tubular component with a conicity of between 1 and 6 degrees.

8. Assembly for making a threaded joint according to any one of the preceding claims, **characterised in that** the threaded zone(s) (3; 4) (each) admit a conical generatrix (20) forming an angle to the axis of revolution (10) of the tubular components greater than 0.5 degrees and preferably equal to 5 degrees.

9. Assembly for making a threaded joint according to claim 8, **characterised in that** the threaded zone(s) (3, 3a, 3b; 4, 4a, 4b) are self-locking, the threads (32; 42) comprising, when viewed along a longitudinal section passing through the axis of revolution (10) of the first and second tubular components, a thread peak (35, 45), a thread valley (36, 46), a carrier flank (30; 40), an engagement flank (31; 41), and the width of the thread peaks (35, 45) of each tubular component decreasing in the direction of the tubular component end surface (7; 8) considered, while the width of the thread valleys (36, 46) increases.

10. Assembly for making a threaded joint according to claim 9, **characterised in that** the threads of the male and female tubular components admit a dovetail profile.

11. Assembly for making a threaded joint according to any one of claims 8 to 9, **characterised in that** the profile corresponding to a concave curve portion (C) is applied to the threaded zone (3a) farthest from the end surface (7) of the male-type end tubular component (1).

12. Assembly for making a threaded joint according to any one of the preceding claims, **characterised in that** the at least one of the threaded zones admits, in a longitudinal cross-section passing through the axis (10), a profile following at least two portions of continuous and concave curves.

13. Assembly for making a threaded joint according to any one of the preceding claims, **characterised in that** the first and last threads of the threaded zones may be imperfect, so as to provide some play between the thread peaks and valleys.

14. Assembly for making a threaded joint according to claim 13, **characterized in that** the clearance (j) between the peaks and the valleys of the imperfect threads is between 0.1 mm and 3 mm.

15. Assembly for making a threaded joint according to claim 3, **characterised in that**, for each component, the second threaded zone (3b; 4b) is positioned along an axis with parallel conicity not concordant with the axis of conicity of the first threaded zone (3a; 4a).

16. Assembly for making a threaded joint according to claim 3, **characterised in that**, for each component, the helix of the second threaded zone (3b; 4b) is offset relative to the helix of the first threaded zone (3a; 4a) by an angle alpha.

17. Threaded joint resulting from the assembly by self-locking tightening of an assembly according to any one of claims 4 to 16.

18. Manufacturing method for a tubular component with an axis of revolution (10), **characterised in that** a first machining of one of the ends of the tubular component is carried out to obtain a profile, along a longitudinal section passing through the axis (10), corresponding to a portion of continuous and concave curve, before proceeding with a second machining to obtain a threaded zone according to any one of claims 1 to 16.
